# EUROPÄISCHE PATENTSCHRIFT

(11) **EP 3 168 183 B1**
(45) Veröffentlichungstag und Bekanntmachung des Hinweises auf die Patenterteilung: **11.08.2021**
(21) Anmeldenummer: 16195289.0
(22) Anmeldetag: 24.10.2016
(51) Int. Cl.: G01S 13/931, G01S 15/931, B66F 9/075, B62B 5/00, G01S 13/74, B62B 3/06, G01S 13/86, G01S 13/88, G01S 15/74, G05D 1/02

(54) **STEUERUNGSVERFAHREN FÜR EIN FLURFÖRDERZEUG UND ENTSPRECHENDES FLURFÖRDERZEUG**
CONTROL METHOD FOR AN INDUSTRIAL TRUCK AND CORRESPONDING INDUSTRIAL TRUCK
PROCÉDÉ DE COMMANDE D'UN CHARIOT DE MANUTENTION ET CHARIOT DE MANUTENTION CORRESPONDANT

(30) Priorität: 16.11.2015 DE 102015119736
(43) Veröffentlichungstag der Anmeldung: 17.05.2017
(73) Patentinhaber: Linde Material Handling GmbH, 63743 Aschaffenburg (DE)
(72) Erfinder: Delmas, Laurent, 86101 Chatellerault Cedex (FR)
(74) Vertreter: Patentship Patentanwaltsgesellschaft mbH

(56) Entgegenhaltungen:
- EP-A1- 2 533 119
- EP-A1- 2 851 331
- WO-A1-2015/121797
- FR-A1- 2 868 560
- FR-A1- 2 980 436
- GB-A- 2 157 436
- US-A- 4 109 186

## Beschreibung

Die Erfindung betrifft ein Steuerungsverfahren für ein Flurförderzeug. Insbesondere betrifft die Erfindung ein Steuerungsverfahren für ein Flurförderzeug mit einer Empfangseinrichtung für ein drahtloses Signal einer von einer Person tragbaren Sendeeinrichtung, wobei die Empfangseinrichtung mit einer Steuerungsvorrichtung verbunden ist. Weiterhin betrifft die Erfindung ein entsprechendes Flurförderzeug.

Zum Kommissionieren, dem Zusammenstellen von Warenlieferungen in einem Warenlager, werden Flurförderzeuge, insbesondere Lagertechnikgeräte in Form von Gabelhubwagen eingesetzt. Dabei wird das Flurförderzeug mit einem Ladungsträger, etwa einer Palette oder einem Drahtgitterkorb, durch die Regalgassen eines Warenlagers bewegt, in denen die zu kommissionierenden bzw. aufzunehmenden Waren gelagert sind. Die das Flurförderzeugs bedienende Person, auch bezeichnet als Kommissionierer, entnimmt je nach Auftrag die im Regal befindlichen Waren, legt diese auf bzw. in den Ladungsträger und fährt das Flurförderzeugs von einem Aufnahmeort zum nächsten innerhalb des Warenlagers. Die Fahrstrecken zwischen den Aufnahmeorten sind dabei in der großen Mehrzahl kurze bis sehr kurze gerade Strecken, beispielsweise entlang eines Regals in dem Warenlager. In der Summe entsteht jedoch durch die Vielzahl der erforderlichen Fahrbewegungen des Flurförderzeugs, die von dem Kommissionierer vorgenommen werden müssen, ein erheblicher Zeitbedarf, da der Kommissionierer zu einer Steuerdeichsel des Gabelhubwagens gehen muss, um die entsprechenden Fahrschalter zu betätigen und das Fahrzeug bei der Fahrbewegung zu steuern, und im Anschluss wieder zurück an die Position zum Aufnehmen der Waren.

Es ist daher bekannt, das Flurförderzeugs teilautomatisiert mit dem Kommissionierer zu bewegen, während die Waren entlang eines Regals aufgenommen werden. Die Steuerung des Flurförderzeugs bei der Fahrt zur nächsten Aufnahmestation kann dabei beispielsweise durch eine Funkfernsteuerung, so etwa einen Funkhandschuh mit einer Funkfernsteuerungsfunktion, oder durch eine Steuerung des Flurförderzeugs über Sprachbefehle erfolgen.

Bei der Steuerung über eine Funkfernsteuerung trägt der Kommissionierer die Fernbedienung mit sich, beispielsweise in Form eines speziellen Handschuhs, und steuert eine Fahrbewegung des Flurförderzeugs durch die Betätigung einer Taste. Eine solche Steuerung über eine Funkfernbedienung, die in einen Handschuh integriert ist, ist aus der EP 2 533 119 A1 bekannt, der die Merkmale des Oberbegriffs des Anspruchs 1 offenbart.

Nachteilig an diesem Stand der Technik ist, dass auch dies jedoch noch Steuerbefehle erfordert und der Kommissionierer seine Aufmerksamkeit immer wieder auf die Fahrsteuerung des Flurförderzeugs richten muss. Auch dadurch entstehen zeitliche Verzögerungen und kann sich die das Flurförderzeug bedienende Person nicht ausschließlich auf das Kommissionieren der Waren konzentrieren.

Bei einer Steuerung durch Sprachbefehle muss der Kommissionierer seine Aufmerksamkeit auf das Bewegen des Flurförderzeugs richten und entsteht überdies als Nachteil das Problem, dass es zu Störungen aufgrund eines hohen Hintergrundgeräuschpegels kommen kann.

Bekannt ist auch ein Verfahren zur teilautomatisierten Steuerung eines Flurförderzeugs beim Kommissionieren, bei dem durch bildgebende Verfahren erkannt wird, wenn eine Person sich von einem Flurförderzeugs entfernt und das Flurförderzeug der Person dann automatisch durch eine gerade Fahrbewegung folgt. Beispielsweise ist ein solches Verfahren beschrieben in der EP 2 851 331 A1.

Nachteilig an diesem Stand der Technik ist jedoch, dass eine relativ aufwendige Sensortechnik in Form optischer Sensoren, etwa 3D-Kameras, erforderlich ist sowie eine hohe Rechenleistung, um durch bildgebende Verfahren die Person zu identifizieren.

Die US 4 109 186 A offenbart ein funkwellengesteuertes Steuerungssystem zur Steuerung der Richtung und der Geschwindigkeit eines Golfswagens, wobei der Golfwagen voneinander beabstandete Empfänger aufweist, um magnetische Signale von einer bewegbaren Energiequelle zu empfangen.

Der vorliegenden Erfindung liegt die Aufgabe zugrunde, ein Steuerungsverfahren für ein Flurförderzeug, insbesondere beim Kommissionieren, zur Verfügung zu stellen, das die zuvor genannten Nachteile vermeidet und mit dem das Flurförderzeug auf einfache Art und Weise mit einer Person zusammen beim Aufladen von Waren bewegt werden kann.

Diese Aufgabe wird durch ein Steuerungsverfahren für ein Flurförderzeug mit den Merkmalen des unabhängigen Patentanspruchs 1 und ein Flurförderzeug nach Anspruch 11 gelöst. Vorteilhafte Weiterbildungen der Erfindung sind in den Unteransprüchen angegeben.

Die Aufgabe wird erfindungsgemäß dadurch gelöst, dass bei einem Steuerungsverfahren für ein Flurförderzeug mit einer Empfangseinrichtung für ein drahtloses Signal einer von einer Person tragbaren Sendeeinrichtung, wobei die Empfangseinrichtung mit einer Steuerungsvorrichtung verbunden ist, die Steuerungsvorrichtung anhand eines Signalpegels des Sendesignals der tragbaren Sendeeinrichtung einen Abstand zu dem Flurförderzeug bestimmt und, wenn ein festgelegter Arbeitsabstand überschritten wird, von der Steuerungsvorrichtung über einen Fahrantrieb des Flurförderzeugs das Flurförderzeug so lange bewegt wird, bis der Abstand zu dem Flurförderzeug geringer als der festgelegte Arbeitsabstand ist.

Vorteilhaft ist somit überhaupt keine Handlung des Kommissionierers bzw. der das Flurförderzeug bedienende Person erforderlich, um während des Aufladens der Waren das Flurförderzeug von einer Aufnahmeposition zur nächsten zu bewegen. Das Flurförderzeug, bevorzugt ein Gabelhubwagen oder ein anderes zum Kommissionieren geeignetes Lagerhausgerät, folgt dem Kommissionierer automatisch und befindet sich stets in einem Abstand innerhalb des Arbeitsbereiches, so dass es gut für den Kommissionierer zu erreichen ist. Dabei bestimmt die Steuerungsvorrichtung den Abstand zu der Person anhand der Signaldämpfung auf der Übertragungsstrecke. Bei dem Signal handelt es sich im Regelfall um ein elektromagnetisches Funksignal, Jedoch ist es auch denkbar, beispielsweise ein Ultraschallsignal oder ähnliches einzusetzen, solange aus einer Signaldämpfung bei bekannter Stärke des von der tragbaren Sendeeinrichtung ausgesendeten Signals, oder auch durch ein aufmoduliertes Signal über eine Laufzeitmessung ein Abstand bestimmt werden kann. Das Fahrzeug wird dabei von der Steuerungsvorrichtung weiter bewegt, nachdem es beispielsweise parallel zu einer Regalseite und mit der Lenkung in geradeaus Stellung von dem Kommissionierer ausgerichtet wurde, sodass es stets in gerader Richtung dem Kommissionierer folgt, sobald dieser über den Abstand des Arbeitsbereiches nach vorne hinaus weiterläuft. Immer, wenn die Steuerungsvorrichtung feststellt, dass der Abstand der Person größer geworden ist, als ein festgelegter definierter Arbeitsabstand, in dem ein Kommissionierer leicht und ohne große Bewegung Waren aus einem Regal entnehmen und auf das Flurförderzeugs aufladen kann, führt die Steuerungsvorrichtung das Flurförderzeug nach. Sobald das Flurförderzeug sich wieder in einem Abstand geringer als der Arbeitsabstand zu der Person befindet, wird das Flurförderzeugs gestoppt. Im Ergebnis bewegt sich das Flurförderzeug automatisiert mit der Bewegungsgeschwindigkeit der Person mit. Vorteilhaft kann die Empfangseinrichtung auch noch so ausgerichtet sein, dass Signale der tragbaren Sendeeinrichtung vor allem oder nur von dieser empfangen werden, wenn die Person sich in der Richtung entfernt von dem Flurförderzeug, in der das Flurförderzeug folgen soll.

Vorteilhaft ist die tragbare Sendeeinrichtung ein Transponder und das Flurförderzeug weist eine Sende- und Empfangseinrichtung auf.

Der Transponder kann ein RFID-Transponder sein.

RFID-Transponder stehen kostengünstig zur Verfügung, sind klein und kompakt und können somit leicht als tragbare Sendeeinrichtung von einer bedienenden Person mitgeführt werden.

Zwischen der tragbaren Sendeeinrichtung und der Empfangseinrichtung kann eine Wifi-, Bluetooth- oder Zigbee-Protokollverbindung bestehen.

Vorteilhaft wird von der Steuerungsvorrichtung über den Fahrantrieb des Flurförderzeugs das Flurförderzeug mit einer Geschwindigkeit bewegt, die die Steuerungsvorrichtung aus einer Bewegungsgeschwindigkeit der tragbaren Sendeeinrichtung gegenüber dem Flurförderzeug bestimmt.

Zusätzlich zu der Nachführung des Flurförderzeugs, sobald der Arbeitsabstand überschritten wird, kann das Flurförderzeug auch aus der Veränderung des Abstands zu der Person eine Bewegungsgeschwindigkeit bestimmen bzw. im Durchschnitt bestimmen und das Flurförderzeug kontinuierlich bewegen. Dabei kann beispielsweise ein Durchschnittswert der Position der Person gegenüber dem Flurförderzeug mit einer bestimmten Zeitkonstante gebildet werden.

Vorteilhaft wird von der Steuerungsvorrichtung über den Fahrantrieb des Flurförderzeugs das Flurförderzeug mit einer Geschwindigkeit bewegt, die die Steuerungsvorrichtung aus Parameterdaten der tragbaren Sendeeinrichtung bestimmt.

Als solche Parameterwerte sind alle Werte denkbar, die von der tragbaren Sendeeinrichtung übertragen werden, und aus denen eine durchschnittliche Bewegungsgeschwindigkeit der Person beim Kommissionieren entlang des Regals bestimmt werden kann.

Die tragbare Sendeeinrichtung kann als Parameterdaten Sensordaten eines Beschleunigungssensors übertragen.

Durch solche Beschleunigungswerte der tragbaren Sendeeinrichtung können die Bewegungen des Kommissionierers erfasst werden. Beispielsweise können dadurch seitliche Bewegungen gegenüber einer Hauptbewegungsrichtung bestimmt werden, die hier keine Rolle spielen und nur zum Aufnehmen der Waren dienen. Weiterhin lässt sich eine durchschnittliche Bewegungsgeschwindigkeit entlang des Regals bestimmen. Es ist denkbar, durch eine solche Bestimmung einer Bewegungsgeschwindigkeit auch unabhängig von der Überschreitung eines Arbeitsabstandes ein Flurförderzeug automatisiert beim Kommissionieren zu bewegen.

Die tragbare Sendeeinrichtung kann als Parameterdaten Sensordaten eines Gyrometers übertragen.

Durch einen solchen Gyrometer werden Drehbeschleunigungen und Drehbewegungen erfasst.

Die tragbare Sendeeinrichtung ist vorteilhaft in ein Armband integriert.

In der Weiterbildung des Verfahrens stoppt die Steuerungsvorrichtung das Flurförderzeug, wenn ein Mindestsignalpegel der tragbaren Sendeeinrichtung unterschritten wird bzw. kein Signalpegel der tragbaren Sendeeinrichtung empfangen wird.

Dadurch wird aus Sicherheitsgründen das Flurförderzeug gestoppt, wenn der Abstand zwischen Person und Flurförderzeug so groß wird, dass ein Signal der tragbaren Sendevorrichtung nicht mehr sicher erfasst werden kann.

Zusätzlich kann zur Vermeidung von Kollisionen das Flurförderzeug mit nach dem Stand der Technik bekannten Sensoren versehen sein, beispielsweise Ultraschallsensoren, Lasersensoren, Kameras oder Infrarotsensoren. Sobald ein Hindernis erfasst wird, stoppt das Flurförderzeug und zusätzlich ist es denkbar, ein Warnsignal auszusenden, beispielsweise ein akustisches Warnsignal. Dadurch kann verhindert werden, dass beispielsweise bei einem automatisierten Bewegen des Flurförderzeugs mit einer durchschnittlichen Bewegungsgeschwindigkeit des Kommissionierer es bei einer Unachtsamkeit zu einer Kollision mit dem Flurförderzeug kommt.

Die Aufgabe wird auch gelöst durch ein Flurförderzeug mit einer Empfangseinrichtung für ein drahtloses Signal einer von einer Person tragbaren Sendeeinrichtung, wobei die Empfangseinrichtung mit einer Steuerungsvorrichtung verbunden ist, die ein zuvor beschriebenes Steuerungsverfahren durchführt.

Weitere Vorteile und Einzelheiten der Erfindung werden anhand der in den schematischen Figuren dargestellten Ausführungsbeispiele näher erläutert. Hierbei zeigt
- Fig. 1: schematisch eine Person mit einem Flurförderzeug, bei dem das erfindungsgemäße Verfahren zum Einsatz kommt,
- Fig. 2: schematisch ein Armband mit integrierter tragbarer Sendeeinrichtung und
- Fig. 3: schematisch die Person und das Flurförderzeug der Fig. 1 in Aufsicht.

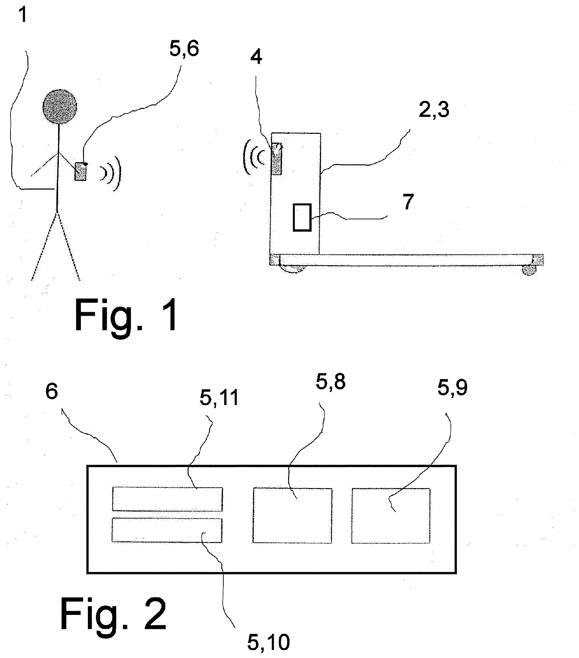

Die Fig. 1 zeigt schematisch eine Person 1 mit einem Flurförderzeug 2, bei dem das erfindungsgemäße Verfahren zum Einsatz kommt. Das Flurförderzeug 2 ist ein Gabelhubwagen 3, der mit einer Sende- und Empfangseinrichtung 4 ausgestattet ist. Die Sende- und Empfangseinrichtung 4 steht in Verbindung mit einer tragbaren Sendeeinrichtung 5, die in ein Armband 6 integriert ist, das die Person 1 beim Kommissionieren trägt. Das Flurförderzeug 2 weist noch eine Steuerungsvorrichtung 7 auf, die mit der Sende- und Empfangseinrichtung 4 in Verbindung steht und einen Fahrantrieb des Gabelhubwagens ansteuern kann.

Die Fig. 2 zeigt schematisch das Armband 6 mit integrierter tragbarer Sendeeinrichtung 5, die eine Steuervorrichtung 8, eine Sendeeinrichtung 9 sowie einen Gyrometer 10 und einen Beschleunigungssensor 11 aufweist. Aus den Daten des Gyrometers 10 sowie des Beschleunigungssensors 11 können die Bewegungen der Person 1 erfasst werden und es kann eine durchschnittliche Bewegungsgeschwindigkeit in Richtung der Fahrtstrecke des Flurförderzeugs 2 bestimmt werden, mit der die Steuerungsvorrichtung 7 des Flurförderzeug 2 bewegt.

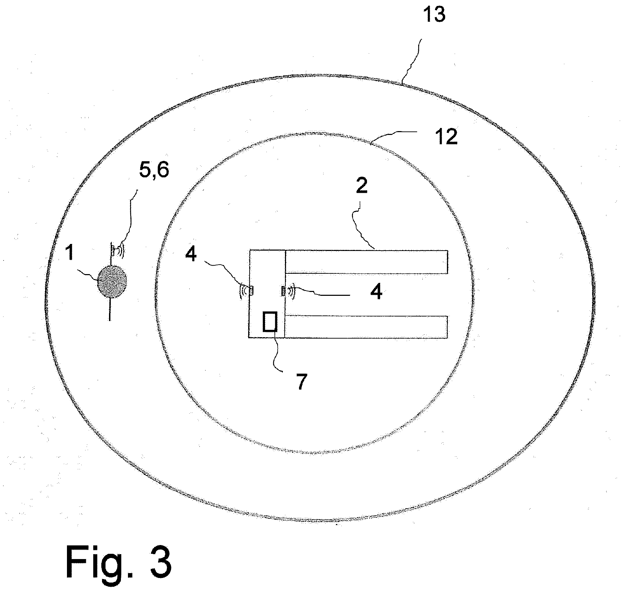

Die Fig. 3 zeigt schematisch die Person 1 und das Flurförderzeug 2 der Fig. 1 in Aufsicht. Die tragbare Sendeeinrichtung 5 in dem Armband 6, das die Person 1 trägt steht in Verbindung mit der Sende- und Empfangseinrichtung 4 des Flurförderzeugs 2. Dabei weist in dieser Darstellung das Flurförderzeug 2 eine zweite Sende- und Empfangseinrichtung 4 auf, die in die andere Richtung orientiert ist. Dadurch ist es möglich, das erfindungsgemäße Verfahren leichter in zwei Richtungen anzuwenden.

Wenn die tragbare Sendeeinrichtung 5 gegenüber dem Flurförderzeug einen festgelegten Arbeitsabstand 12 überschreitet, steuert die Steuerungsvorrichtung 7 den Fahrantrieb an und das Flurförderzeug bewegt sich weiter, wobei im Regelfall eine Lenkung in eine Geradeaus-Stellung gestellt ist und es vorgesehen sein kann, dass die bedienende Person zuvor die Fahrtrichtung allgemein festgelegt. Diese Situation ist in der Fig. 3 dargestellt. Als weiterer Abstand ist ein einem Mindestsignalpegel entsprechender Erfassungsabstand 13 eingezeichnet. Wenn die Person 1 über diesen hinaus sich von dem Flurförderzeug 2 entfernt und daher das Signal der tragbaren Sendeeinrichtung 5 nicht sicher empfangen werden kann, schaltet die Steuerungsvorrichtung 7 das Flurförderzeug 2 aus Sicherheitsgründen ab.

Neben oder alternativ zu dem Nachführen des Flurförderzeugs 2 mithilfe des Arbeitsabstandes 12 kann auch eine durchschnittliche Bewegungsgeschwindigkeit der Person 1 in der Fahrtrichtung des Flurförderzeugs 2 bestimmt werden, indem die Veränderung des Abstands zwischen Person 1 und Flurförderzeug 2 im Durchschnitt mit einer Zeitkonstante bestimmt wird und/oder Parameterdaten der tragbaren Sendeeinrichtung 5 von der Steuerungsvorrichtung 7 des Flurförderzeugs 2 und/oder der Steuervorrichtung 8 der tragbaren Sendeeinrichtung 5 ausgewertet werden. Die Steuerungsvorrichtung 7 steuert dann den Fahrantrieb des Flurförderzeugs 2 entsprechend an.

## Patentansprüche

1. Steuerungsverfahren für ein Flurförderzeug mit einer Empfangseinrichtung (4) für ein drahtloses Signal einer von einer Person (1) tragbaren Sendeeinrichtung (5), wobei die Empfangseinrichtung (4) mit einer Steuerungsvorrichtung (7) verbunden ist,
**dadurch gekennzeichnet,**
**dass** die Steuerungsvorrichtung (7) anhand eines Signalpegels des Sendesignals der tragbaren Sendeeinrichtung (5) einen Abstand zu dem Flurförderzeug (2) bestimmt und, wenn ein festgelegter Arbeitsabstand (12) überschritten wird, von der Steuerungsvorrichtung (7) über einen Fahrantrieb des Flurförderzeugs (2) das Flurförderzeug (2) so lange bewegt wird, bis der Abstand zu dem Flurförderzeug (2) geringer als der festgelegte Arbeitsabstand (12) ist.

2. Steuerungsverfahren nach Anspruch 1,
**dadurch gekennzeichnet,**
**dass** die tragbare Sendeeinrichtung (5) ein Transponder ist und das Flurförderzeug (2) eine Sende- und Empfangseinrichtung (4) aufweist.

3. Steuerungsverfahren nach Anspruch 2,
**dadurch gekennzeichnet,**
**dass** der Transponder ein RFID-Transponder ist.

4. Steuerungsverfahren nach einem der Ansprüche 1 bis 3,
**dadurch gekennzeichnet,**
**dass** zwischen der tragbaren Sendeeinrichtung (5) und der Empfangseinrichtung (4) eine Wifi-, Bluetooth- oder Zigbee-Protokollverbindung besteht.

5. Steuerungsverfahren nach einem der Ansprüche 1 bis 4,
**dadurch gekennzeichnet,**
**dass** von der Steuerungsvorrichtung (7) über den Fahrantrieb des Flurförderzeugs (2) das Flurförderzeug (2) mit einer Geschwindigkeit bewegt wird, die die Steuerungsvorrichtung (7) aus einer Bewegungsgeschwindigkeit der tragbaren Sendeeinrichtung (5) gegenüber dem Flurförderzeug (2) bestimmt.

6. Steuerungsverfahren nach einem der Ansprüche 1 bis 5,
**dadurch gekennzeichnet,**
**dass** von der Steuerungsvorrichtung (7) über den Fahrantrieb des Flurförderzeugs (2) das Flurförderzeug (2) mit einer Geschwindigkeit bewegt wird, die die Steuerungsvorrichtung (7) aus Parameterdaten der tragbaren Sendeeinrichtung (5) bestimmt.

7. Steuerungsverfahren nach Anspruch 6,
**dadurch gekennzeichnet,**
**dass** die tragbare Sendeeinrichtung (5) als Parameterdaten Sensordaten eines Beschleunigungssensors (11) überträgt.

8. Steuerungsverfahren Anspruch 6 oder 7,
**dadurch gekennzeichnet,**
**dass** die tragbare Sendeeinrichtung (5) als Parameterdaten Sensordaten eines Gyrometers (10) überträgt.

9. Steuerungsverfahren nach einem der Ansprüche 1 bis 8,
**dadurch gekennzeichnet,**
**dass** die tragbare Sendeeinrichtung (5) in ein Armband (6) integriert ist.

10. Steuerungsverfahren nach einem der Ansprüche 1 bis 9,
**dadurch gekennzeichnet,**
**dass** die Steuerungsvorrichtung (7) das Flurförderzeug (2) stoppt, wenn ein Mindestsignalpegel der tragbaren Sendeeinrichtung unterschritten wird bzw. kein Signalpegel der tragbaren Sendeeinrichtung empfangen wird.

11. Flurförderzeug mit einer Empfangseinrichtung (4) für ein drahtloses Signal einer von einer Person (1) tragbaren Sendeeinrichtung (5), wobei die Empfangseinrichtung (4) mit einer Steuerungsvorrichtung (7) verbunden ist, die ein Steuerungsverfahren nach einem der vorhergehenden Ansprüche durchführt.

## Claims

1. Control method for an industrial truck with a receiving device (4) for a wireless signal of a portable transmitting device (5) that can be carried by a person (1), wherein the receiving device (4) is connected to a control device (7),
**characterized**
**in that** the control device (7) determines a distance from the industrial truck (2) on the basis of a signal level of a transmitted signal of the portable transmitting device (5) and, if a fixed working distance (12) is exceeded, the industrial truck (2) is moved by the control device (7), using a traction drive of the industrial truck (2), until the distance from the industrial truck (2) is less than the fixed working distance (12).

2. Control method according to Claim 1,
**characterized**
**in that** the portable transmitting device (5) is a transponder and the industrial truck (2) has a transmitting and receiving device (4).

3. Control method according to Claim 2,
**characterized**
**in that** the transponder is an RFID transponder.

4. Control method according to one of Claims 1 to 3,
**characterized**
**in that** between the portable transmitting device (5) and the receiving device (4) there is a Wi-Fi, Bluetooth or Zigbee protocol connection.

5. Control method according to one of Claims 1 to 4,
**characterized**
**in that** the industrial truck (2) is moved by the control device (7), using the traction drive of the industrial truck (2), at a speed that the control device (7) determines from the speed of movement of the portable transmitting device (5) with respect to the industrial truck (2).

6. Control method according to one of Claims 1 to 5,
**characterized**
**in that** the industrial truck (2) is moved by the control device (7), using the traction drive of the industrial truck (2), at a speed that the control device (7) determines from parameter data of the portable transmitting device (5).

7. Control method according to Claim 6,
**characterized**
**in that** the portable transmitting device (5) transmits sensor data of an acceleration sensor (11) as parameter data.

8. Control method according to Claim 6 or 7,
**characterized**
**in that** the portable transmitting device (5) transmits sensor data of a gyrometer (10) as parameter data.

9. Control method according to one of Claims 1 to 8,
**characterized**
**in that** the portable transmitting device (5) is integrated in an armband (6).

10. Control method according to one of Claims 1 to 9, **characterized in that** the control device (7) stops the industrial truck (2) if the signal from the portable transmitting device goes below a minimum level or no signal level is received from the portable transmitting device.

11. Industrial truck with a receiving device (4) for a wireless signal of a portable transmitting device (5) that can be carried by a person (1), wherein the receiving device (4) is connected to a control device (7), which carries out a control method according to one of the preceding claims.

## Revendications

1. Procédé de commande pour un chariot de manutention comprenant un équipement de réception (4) pour un signal sans fil d'un équipement d'émission (5) pouvant être porté par une personne (1), l'équipement de réception (4) étant relié à un dispositif de commande (7),
**caractérisé en ce que** le dispositif de commande (7) détermine à l'aide d'un niveau de signal du signal d'émission de l'équipement d'émission portable (5) une distance jusqu'au chariot de manutention (2), et si une distance de travail fixée (12) est dépassée, le dispositif de commande (7) déplace le chariot de manutention (2) par un système d'entraînement du chariot de manutention (2) jusqu'à ce que la distance jusqu'au chariot de manutention (2) soit inférieure à la distance de travail fixée (12).

2. Procédé de commande selon la revendication 1, **caractérisé en ce que** l'équipement d'émission portable (5) est un transpondeur, et le chariot de manutention (2) présente un équipement d'émission et de réception (4) .

3. Procédé de commande selon la revendication 2, **caractérisé en ce que** le transpondeur est un transpondeur RFID.

4. Procédé de commande selon l'une quelconque des revendications 1 à 3, **caractérisé en ce qu'**il existe une liaison de protocole Wifi, Bluetooth ou Zigbee entre l'équipement d'émission portable (5) et l'équipement de réception (4).

5. Procédé de commande selon l'une quelconque des revendications 1 à 4, **caractérisé en ce que** le dispositif de commande (7) déplace le chariot de manutention (2) par l'intermédiaire du système d'entraînement du chariot de manutention (2) à une vitesse que le dispositif de commande (7) détermine à partir d'une vitesse de déplacement de l'équipement d'émission portable (5) par rapport au chariot de manutention (2).

6. Procédé de commande selon l'une quelconque des revendications 1 à 5, **caractérisé en ce que** le dispositif de commande (7) déplace le chariot de manutention (2) par l'intermédiaire du système d'entraînement (2) à une vitesse que le dispositif de commande (7) déterminé à partir de données de paramètre de l'équipement d'émission portable (5).

7. Procédé de commande selon la revendication 6, **caractérisé en ce que** l'équipement d'émission portable (5) transmet comme données de paramètre des données de capteur d'un capteur d'accélération (11).

8. Procédé de commande selon la revendication 6 ou 7, **caractérisé en ce que** l'équipement d'émission portable (5) transmet comme données de paramètre des données de capteur d'un gyromètre (10).

9. Procédé de commande selon l'une quelconque des revendications 1 à 8, **caractérisé en ce que** l'équipement d'émission portable (5) est intégré dans un bracelet (6).

10. Procédé de commande selon l'une quelconque des revendications 1 à 9, **caractérisé en ce que** le dispositif de commande (7) arrête le chariot de manutention (2) si un niveau de signal minimal de l'équipement d'émission portable est soupassé ou si aucun niveau de signal de l'équipement d'émission portable n'est reçu.

11. Chariot de manutention comprenant un équipement de réception (4) pour un signal sans fil d'un équipement d'émission (5) pouvant être porté par une personne (1), l'équipement de réception (4) étant relié à un dispositif de commande (7) qui effectue un procédé de commande selon l'une quelconque des revendications précédentes.
